# EUROPEAN PATENT SPECIFICATION

(11) **EP 2 347 630 B1**
(45) Date of publication and mention of the grant of the patent: **27.02.2019**
(21) Application number: 09779400.2
(22) Date of filing: 04.05.2009
(51) Int. Cl.: H04M 3/08, H04M 7/12, H04W 92/24, H04L 12/24, H04L 29/06, H04M 3/24

(54) **METHOD FOR GROUPING TERMINATIONS**
VERFAHREN ZUR GRUPPIERUNG VON ANSCHLÜSSEN
PROCÉDÉ DE REGROUPEMENT DES TERMINAISONS

(30) Priority: 05.11.2008 WO PCT/EP2008/064995
(43) Date of publication of application: 27.07.2011
(73) Proprietor: Telefonaktiebolaget LM Ericsson (publ), 164 83 Stockholm (SE)
(72) Inventor: ABERG, Fredrik, FI-FIN-02400 Kyrkslätt (FI); JOENSUU, Erkki, FI-Fin-02580 Siuntio (FI); ERKE, Tuomas, FI-02760 Espoo (FI)
(74) Representative: Ericsson
(86) International application number: PCT/EP2009/055364
(87) International publication number: WO 2010/052035

(56) References cited:
- WO-A-03/107619
- WO-A1-03/107618
- US-B1- 7 126 941
- US-B1- 7 466 710
- GROVES C ET AL: "The Megaco/H.248 Gateway Control Protocol, version 2; draft-ietf-megaco-h248v2-04.txt" IETF STANDARD-WORKING-DRAFT, INTERNET ENGINEERING TASK FORCE, IETF, CH, vol. megaco, no. 4, 1 April 2003 (2003-04-01), XP015002612 ISSN: 0000-0004
- 3GPP: "3GPP TS 29.232 V8.4.0 (2008-09) 3rd Generation Partnership Project; Technical Specification Group Core Network and Terminals; Media Gateway Controller (MGC) - Media Gateway (MGW) interface; Stage 3 (Release 8)" 3GPP, [Online] 23 September 2008 (2008-09-23), pages 1-142, XP002541675 Retrieved from the Internet: URL:http://www.3gpp.org/ftp/Specs/html-inf o/29232.htm> [retrieved on 2009-08-17]

## Description

### Technical Field

This invention relates to a method for exchanging commands between a media gateway and a media gateway controller, to a method for grouping terminations of a media gateway and to the media gateway or media gateway controller itself.

### Background

The trend in mobile communication systems goes towards high capacity mobile switching center (MSC) servers which are also scalable. A typical architecture for such a system is a blade cluster structure with a plurality of blades. Transmission lines that carry payload are terminated in media gateways and the switching of these resources is controlled by the MSC server. Furthermore, a pool of terminations is provided at the media gateway, the pool of terminations being controlled by the different blades of the MSC. In case one blade of the MSC server fails, the terminations controlled by said blade have to be released in order to make them available for other calls. In this context, the terminations controlled by a failed blade need to be released in an efficient way. One possibility to release the terminations controlled by the failed blade would be to subtract the different terminations one by on e by sending a subtract command to each termination. However, this represents an unacceptable amount of signalling and recovery time. The same problem occurs when a board in the media gateway fails and when the terminations of that board need to be taken out of usage.

H.248 is for a control of elements in a multimedia gateway and is used as a control protocol between the media gateway and the media gateway controller. In this protocol a wildcard mechanism is known using two types of wildcards with termination IDs. These two wildcards are "ALL" and "CHOOSE". The former "ALL" is used to address multiple terminations at once while the latter is used to indicate to the media gateway that it should select a termination satisfying a partially specified termination ID.

WO2003/107619 provides an alternative to the "ALL" in that terminations are grouped in a new (global) termination as a pseudo context which can be addressed with the termination ID of that global termination. Major draw back is however that the amount of terminations in a context is quite limited in a media gateway and can not be thousands of terminations that would be required for instance to make a difference between A interface and A over IP based interface terminations.

A termination for a media gateway is a logical entity which is the source and/or the sink of media and/or control streams. Each termination has a unique entity, the termination ID.

A context is an association between a number of terminations, the context describing the topology (who hears/sees whom) and the media mixing and/or switching parameters if more than two terminations are involved in the association. A context is created by adding the first termination and it is released by removing/ subtracting the last termination.

There are many reasons why a group of terminations needs to be grouped in the media gateway or the media gateway controller which can be the MSC server. By way of example terminations may be grouped due to their different capabilities, type of security level, such as trusted or non-trusted domain, or any other aspect which is wanted based on a set of given rules.

A traditional way of grouping terminations is based on the wildcard mechanism, where certain parts of the termination identifiers in the H.248 protocol are used. Additionally, a priority indicator with value range from 0 to 15 is known from the H.248 protocol: the priority is used for a context in order to provide the media gateway with information about a certain precedence handling for a context. The media gateway controller can also use the priority to control autonomously the traffic precedence in the media gateway in a smooth way, e.g. during restart, when a lot of contexts must be handled simultaneously. Priority 0 is the lowest priority and a priority of 15 is the highest priority.

However, the handling is not optimized from a H.248 point of view, meaning that the grouping for terminations is not very flexible and not very scalable. In the H.248 protocol the termination identifier may be defined as a 32 bit value or a 64 bit value. Using a certain part of the termination identifier, e.g. the three least significant bits, for a certain purpose, for example for server identification, would introduce proprietary logic in both the server node and the media gateway. The H.248 protocol is also used between devices from different vendors, so that this kind of logic does not work in a multi-vendor environment.

Any change to the existing termination structure leads to backwards incompatibility and upgrade problems with older products that do not support the given termination identifier format. At present there is no efficient way to handle (subtract, move or modify) a massive set of terminations, where a priority indicator is set to a certain value or terminations of a certain service type or terminations relating to a certain type of interface, such as network internal or network external from a media gateway point of view. Additionally, it is difficult to handle a set of terminations based on the type of destination (trusted domain or non-trusted domain) or based on any other given policy function.

### Summary

Accordingly, a need exists to provide an efficient way for addressing a plurality of terminations with a minimum number of messages or commands to be exchanged.

This need is met by the features of the independent claims. In the dependent claims preferred embodiments of the invention are described.

Preferably, rules describing the meaning of the different grouping parameters can be stored in a centralized database accessible by a plurality of different media gateway controllers, the media gateway controllers accessing said centralized database for retrieving the rules for the different grouping parameters. This database may be defined as a new physical node in the network or may be designed as a logical component within some other physical node. By way of example this database may be integrated into the node of the media gateway controller.

With the use of a grouping parameter the grouping of terminations depending on different criteria is possible. By way of example the grouping parameter allows to prioritize the terminations used for a call by using a priority-dependent grouping parameter. Another possibility is to use a grouping parameter allowing to differentiate different kinds of interfaces used in connection with different terminations by using different values of the MGC grouping parameter for each interface. In another embodiment the grouping parameter allows to determine for which termination a voice enhancement is necessary by assigning different values of a grouping parameter to a termination depending on the fact whether a voice enhancement is necessary or not. In another embodiment the grouping parameter may be used to identify a processing unit or a board of the media gateway or media gateway controller that is controlling said termination in connection with a call by assigning a processing unit depending grouping parameter to said termination. By way of example in case a processing unit or blade is failing, the terminations controlled by the failing blade can be released using one single message by sending a message to the media gateway having the grouping parameter allowing to identify the failing blade. The media gateway can then release all terminations controlled by the failing blade. In the event of a failure of a processing unit of the media gateway, the media gateway controller can also be informed of the failure of the terminations present on said failing board by using a single message containing a board identifier of the failing board as a grouping parameter.

One possibility to check whether the media gateway or the media gateway controller supports the use of a grouping parameter dependent execution of commands is the package auditing mechanism of the H.248 protocol. In case the receiving unit does not support a grouping parameter dependent execution, it can respond with a message that this mechanism is not supported.

Depending on the given policy and usage of a grouping parameter, the range of values of a grouping parameter may be large or small. Sometimes a two value range is sufficient, e.g. for indicating whether a voice enhancement is necessary or not, whereas for other grouping parameters a larger range may be needed, e.g. for prioritizing a call. The range of possible values of the grouping parameters may be stored in a H.248 protocol package. This H.248 package can be the Base Root Package or a specific package designed for the purpose, such as a grouping package.

When a command containing a grouping parameter has been transmitted, the terminations, for which the grouping parameter contained in the received command corresponds to the grouping parameter stored in connection with the termination, can be specified in a reply message to the message containing the command. The terminations and contexts having stored grouping parameters matching to those specified in the command can be returned in a reply message to the transmitting unit.

Additionally, it should be possible to reset the grouping parameters stored in connection with a termination when it is detected that a processing unit controlling said termination fails.

### Brief Description of the Drawings

The invention as well as a preferred mode of use and further advantages thereof will best be understood by reference to the following detailed description of illustrative embodiments when read in conjunction with the accompanying drawings, wherein
Fig. 1 shows a functional block diagram of a media gateway and a media gateway controller allowing to address a plurality of terminations with a single message,
Fig. 2 shows a flowchart illustrating the operation of the media gateway controller or the media gateway when a command containing a grouping parameter is received,
Fig. 3 shows an embodiment where a grouping parameter helps to group terminations independent of the type of termination,
Fig. 4 shows a block diagram of a system where the policies and rules are stored in a centralized database accessible by a plurality of media gateway controllers,
Fig. 5 shows a flowchart where the grouping parameter is set by the media gateway controller,
Fig. 6 shows a flowchart where the media gateway uses the grouping parameters, and
Fig. 7 shows an example of grouping parameters as stored in a media gateway.

### Detailed Description

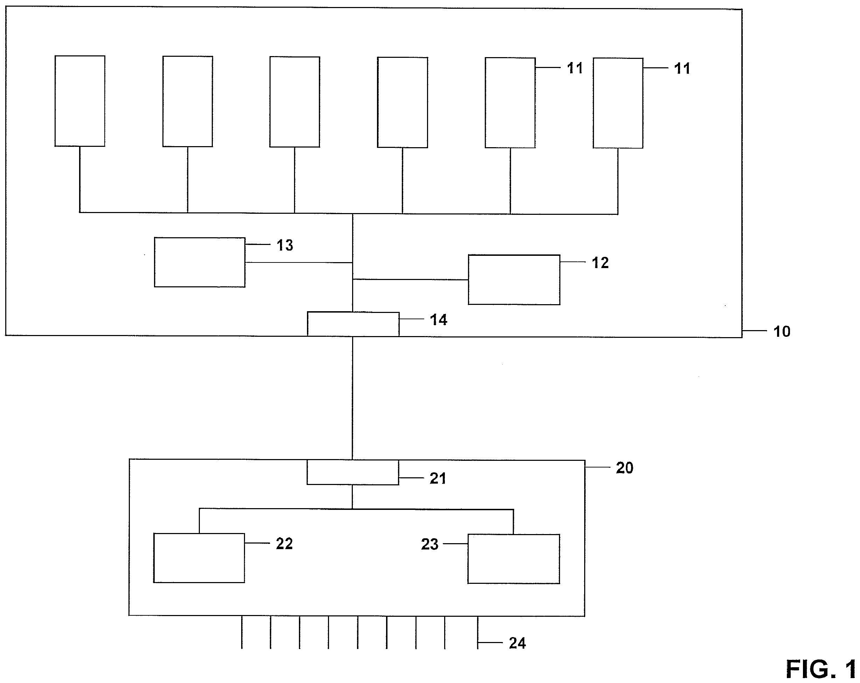

With reference now to the Figs. and in particular with reference to Fig. 1 a schematic block diagram of a media gateway controller and a media gateway is shown. In the embodiment shown, the media gateway controller is an embedded function of a mobile switching center server 10. However, the media gateway controller needs not necessarily be incorporated into the MSC server. In the embodiment shown, the MSC server 10 has a multi-blade architecture with a plurality of blades 11, each blade 11 having its own processing unit (not shown), each processing unit controlling terminations 24 of the media gateway 20. The terminations 24 may be provided as a pool of terminations and each of the blades 11 may control any of the terminations 24. In the event of a failure of one blade of the media gateway controller, the terminations controlled by said blade have to be released in order to allow other blades to use these terminations for signalling. In the embodiment shown, the media gateway controller is connected to one media gateway. However, it should be understood that the media gateway controller may be connected to a plurality of media gateways, but for ease of reading and without limiting the invention reference is made to only a single media gateway 20. The media gateway controller 10 sets up and releases end-to-end connections, handles mobility and handover requirements during a call and takes care of charging and accounting. For controlling the terminations 24, messages are transmitted from the different blades to the termination to which the message is related. By way of example the message may be a message to add a termination, to subtract a termination, or to modify a termination. The media gateway controller or MSC server 10 comprises a transmitting/receiving unit 14. Additionally, a control unit 12 is provided that allocates a grouping parameter to several terminations, thereby builing a group of terminations identified by the same grouping parameter. Additionally, a database 13 is provided storing a grouping parameter in connection with a termination 24. In case a message containing a grouping parameter is received from the media gateway 20, the control unit also checks to which terminations of the media gateway the message applies. The media gateway comprises a transmitting/receiving unit 21, a control unit 22 allocating a grouping parameter to a group of terminations and checking, when a command containing a grouping parameter is received, whether the received command is valid for a predetermined termination by checking whether the grouping parameter contained in the received command corresponds to the grouping parameter stored in connection with said termination. In a database 23 the grouping parameter is stored in connection with said termination. Database 23 allows to link the grouping parameters to the different terminations 24.

Both control units 12 and 22 allocate a grouping parameter to a termination and check whether a grouping parameter received in a command coincides with a grouping parameter stored in connection with a termination.

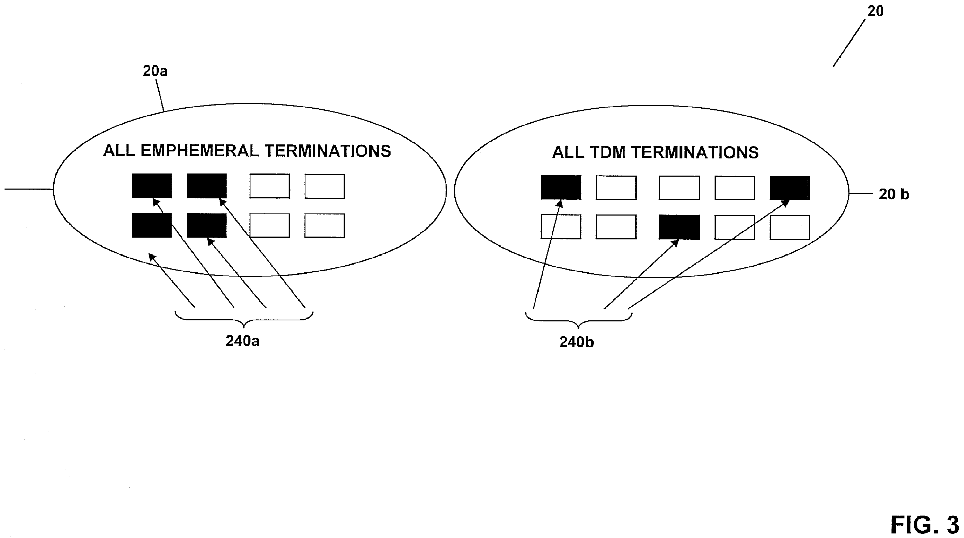

In the embodiment shown in Fig. 3 a first example of grouping terminations is shown. In a media gateway 20 both ephemeral terminations and TDM terminations are present. The media gateway shown comprises two different boards, board 20a and 20b. In board 20a all ephemeral terminations are grouped consisting of core network terminations and radio network (RNC) terminations. TDM terminations grouped on board 24b consist of both PSTN and A interface terminations. The media gateway controller can now group terminations where a certain function to be controlled is to be activated or deactivated in one group and adds a grouping parameter with a unique value for this group. In the embodiment shown, the grouping parameter having this unique value was added for the terminations having a shaded area, the terminations 240a on board 20a and the terminations 240b on board 20b. By way of example the grouping parameter could be for example a voice quality enhancement function to be turned on only for A and Iu interface terminations. The mobile switching center server as a media gateway controller sends a request to the media gateway with context ID = ALL, terminations ID = ALL and also includes the grouping parameter with the above-mentioned unique value which narrows the request scope to cover only the parts which have been tagged with said unique value. This example shows that different types of terminations can be manipulated with one command independent of their termination type, be it a TDM or ephemeral termination.

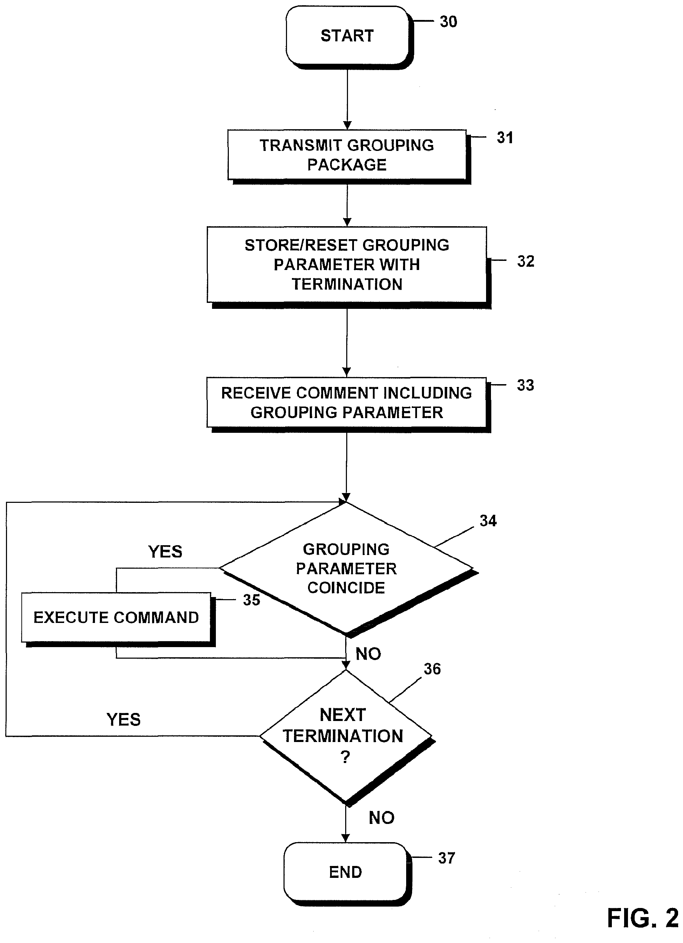

In Fig. 2 the steps carried out when a plurality of terminations is addressed by one single command are summarized. The method starts in step 30. In step 31 the transmitting unit which can be the media gateway controller or the media gateway groups terminations by transmitting a grouping package in step 31 determining that a certain connection or termination shall belong to a certain group. At the receiving side the grouping parameter is stored in connection with the termination (step 32). When an event is detected that influences that group of terminations, a message is sent from the transmitter containing the grouping parameter allowing to address a predetermined group of terminations. This message containing the command with the grouping parameter is received in step 33. In step 34 it is asked whether the grouping parameter stored in connection with a termination coincides with the grouping parameter contained in the received message. If this is the case, the command is executed in step 35 for said termination. Then the query of step 34 is again carried out for the next termination until all possible terminations of the media gateway have been addressed. If it is detected in step 34 that a termination does not have a grouping parameter that corresponds to the grouping parameter received with the command, the command is not executed for that termination. When all terminations have been checked in step 36, the method ends in step 37.

The grouping parameter can be included in a command as a figure representing the value of the parameter. However, it is also possible to introduce a predetermined bit pattern corresponding to the value of the parameter, wherein the bit pattern being stored at the terminations is compared to the bit pattern contained in the command.

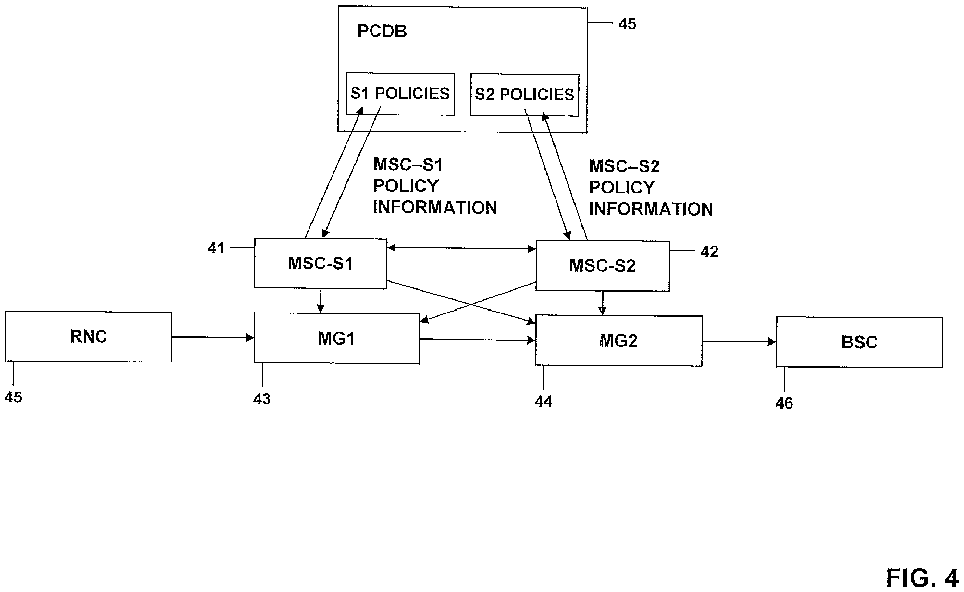

In Fig. 4 a system is shown where the rules or policies for the grouping parameters are provided in a centralized database 45. This database PCDB (Policy Control Database) can be integrated as a logical component in a mobile switching center server or can be a separate physical node. The database 45 contains the policies which can be based on for example network dimensioning and configuration related data. The policy information is used by the different MSC servers, in the embodiment shown the two MSC servers S1 and S2 referenced with numerals 41 and 42. The database can have policies for the different MSC servers, such as the policies or rules for MSC server 41 and policies or rules for MSC server 42. The configuration of the different grouping parameters can be done centrally in the database 45. Different MSC servers may have the same or different policies depending on their capabilities. The MSC servers 41 and 42 are in connection with the media gateways 43 and 44. In the embodiment shown in Fig. 4 an example is shown where mobile user data are transmitted via the radio network controller 45 via the media gateways to a base station controller 46.

The following grouping parameters may be stored in the central database 45. The grouping parameters may be differentiated depending on which entity is aware of the different values the grouping parameters can have. One example of a grouping parameter is the MGC grouping parameter, which can be a 32 bit parameter which has a meaning to the database 45 and the MSC servers, but not to the media gateway. This grouping parameter is formed based on policy logic. It can be given any value ranges based on the chosen policy. One simple policy is to give a first value, such as 1, to emergency calls and to give another value, such as 0, to a non-emergency call. A more advanced solution is to define grouping parameters in the IP network based on IP ranges and their bandwidth capacities or based on whether the domain is trusted or not. Another example is a MGC-MG grouping parameter which has a meaning to the MSC server (and the database 45) and the media gateway. The media gateway stores the value of this parameter and has internal logic like the reservation of a certain type of resource based on the value of this parameter. The MSC server can implement even more advanced logic using this parameter compared to only using the MGC grouping parameter. Last but not least an MG grouping parameter may be provided that is allocated by the media gateway, the mobile switching center server storing the parameter value which was allocated by the media gateway.

In addition to these parameters the possible range of values of the different parameter is added to the H.248 protocol, so that the media gateway database tables memory handling can be optimized to the right level, as the maximum number of values of the different grouping parameters can be high or low.

The MGC grouping parameter or MGC-MG grouping parameter may be sent in connection with an add request, modify request or move request or in an audit response message. Furthermore, it is possible to adapt service change messages in order to be able to handle these parameters. The possible values of the MGC grouping parameter or MGC-MG grouping parameter could be added to a H.248 Base Root Package which contains other existing maximum limits to be used in the H.248 protocol. Alternatively a separate H.248 grouping package could be used for this purpose.

The MSC servers can use a H.248 audit request message to audit certain MGC grouping parameter values. Furthermore, the MSC server may have some additional logic based on the audit response logic if needed.

Based on the grouping parameters the transmitting unit transmitting a command containing the parameters can manipulate, such as add, move, modify or release, terminations, namely a group of terminations with a single message.

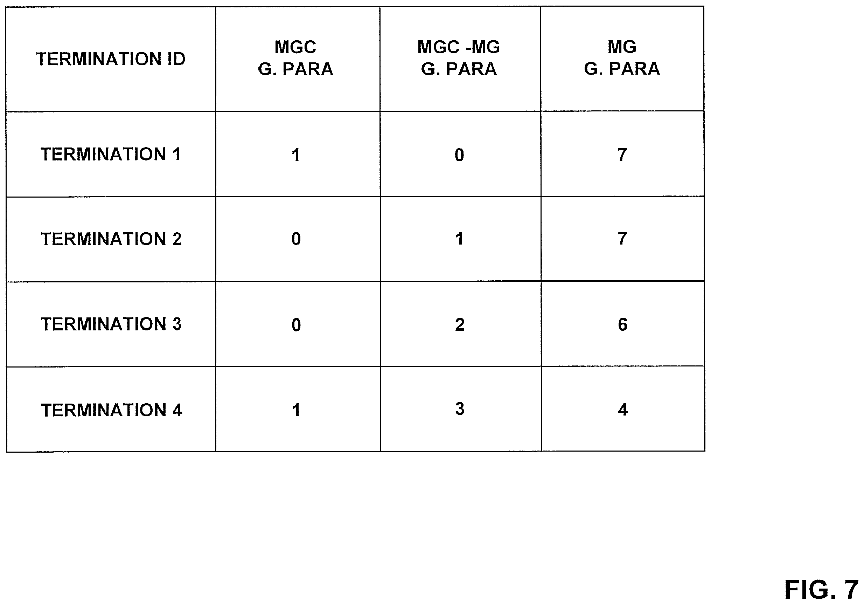

In connection with Fig. 7 an example of a database is shown how the different parameters are stored in the media gateway or the media gateway controller. The structure of the termination ID is not dependent on the usage of the grouping parameters. In the table shown the different parameters are stored in connection with the different terminations. By way of example the MGC grouping parameter 1 may indicate that the termination is used for an emergency call, whereas the MGC grouping parameter 0 is used for a non-emergency call. In the table shown terminations 1 and 4 are used in connection with emergency calls, whereas terminations 2 and 3 are used in connection with non-emergency calls. For the MGC-MG grouping parameter different values are used. By way of example the value 0 of termination 1 may mean that it is used for an Iu interface with no voice quality enhancement active. The value 1 may be used for an Iu interface with the voice quality enhancement active, the value 2 may be used for an A interface termination with no voice quality enhancement, the value 3 being used for an A interface termination with an active voice quality enhancement. As far as the MG grouping parameter is concerned, the indicated values may correspond to the priority levels for calls handled by the different terminations, the higher the value the higher the priority or vice versa.

The use of the different grouping parameters is illustrated by the following examples. The media gateway controller adds, moves or modifies a single termination in a context and includes in a message a MG grouping parameter which has a value based on the given policy function. The media gateway controller notices that the policy functions require low priority calls to be released, e.g. with a MG grouping parameter set to a value of 3 or lower. The media gateway controller can send a service change or subtract request message including the wildcard context ID = ALL, termination ID = ALL and a list of MG grouping parameters with values of 0 to 3 to the media gateway giving the gateway order to release the terminations with the given grouping parameter. The media gateway can then subtract the terminations with the given MG grouping parameter having values from 0 to 3. In this example the different grouping parameters 0 to 3 sent in one message may be combined with an "OR" logic.

In another example Nb, Iu and A interfaces are used for IP transport and the MGC grouping parameter. 1 may be reserved for Iu interface over IP terminations, the MGC grouping parameter 2 may be reserved for A interface over IP terminations and MGC grouping parameter 3 may be reserved for Nb interface over IP terminations. The MSC server acting as media gateway controller moves, adds or modifies a single termination in a context, the MSC server including in a message to the media gateway the MGC grouping parameter. Later on the mobile switching center server may find out that voice quality enhancement functions need to be turned on for Iu over IP terminations but not for the other type of terminations. For enabling the voice quality enhancement functions for a specific type of terminations, the MSC server may send a single service change message including the wildcard context ID = ALL, termination ID = ALL with the MGC grouping parameter having a value of 1 to the media gateway giving the media gateway the order to enable the voice quality enhancement for all Iu terminations.

In the next example two different grouping parameters are used. As discussed above, the value 0 of the MGC grouping parameter may be reserved for non-emergency calls, whereas the value 1 of this MGC grouping parameter is reserved for emergency calls. For the MGC-MG grouping parameter the value 0 may be given for all Iu interface terminations which require voice quality enhancement to be activated in the media gateway, whereas the value 1 is given to all Iu interface terminations which require no voice quality enhancement to be activated in the media gateway. The MSC server can now add, move or modify a single termination in a context including in a message both the MGC grouping parameter and the MGC-MG grouping parameter having values based on the given policy functions. If the MGC-MG grouping parameter value for a termination is equal to 0, the media gateway reserves voice quality enhancement functions in the media gateway, and if the MGC-MG grouping parameter is equal to 1, the media gateway does not reserve voice quality enhancement functions.

It may happen that the MSC server notices that a given policy function rule tells the system that now the IP terminations which consume the most resources must be released. However, the emergency calls should not be released. First, all terminations having voice quality enhancement in an active state are released except for emergency calls. The MSC server sends a service change or subtract message to the media gateway including the wildcard context ID = ALL, termination ID = ALL and the MGC grouping parameter value set to 0 and the MGC-MG grouping parameter value set to 1. The media gateway subtracts the terminations with the given grouping parameter values. In this example emergency terminations with voice quality enhancement functions are still working in the media gateway and they have a MGC grouping parameter set to 1, so that the media gateway does not subtract these terminations.

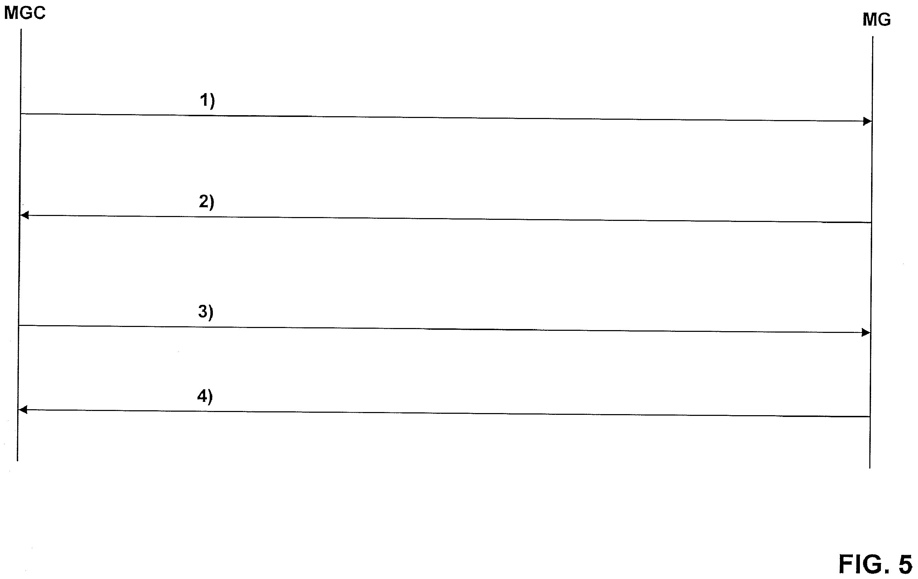

In Fig. 5 another embodiment is shown where a failure of a blade in the media gateway controller initiates a release of all terminations controlled by said blade. In step 1 of Fig. 5 the media gateway controller sends a message to the media gateway including a grouping parameter having a predetermined value (e. g. value 2) indicating that the blade with a number corresponding to said predetermined value controls this termination.

The media gateway supporting the use of grouping parameters acknowledges the command and stores the grouping parameter related to the termination. Now it may happen that the media gateway controller loses the blade with the predetermined number, such as the blade 2, due to a restart, and it releases all terminations related to blade 2. The server sends in step 3 a subtract request to the media gateway, the subtract request including a wildcard for all contexts and terminations and a grouping parameter set to the value of 2. The media gateway can then find through its database, where all terminations and contexts are stored with the corresponding grouping parameters, those terminations and contexts which were controlled by failing blade 2, the media gateway releasing these terminations and responds to the server in step 4 in a subtract response message.

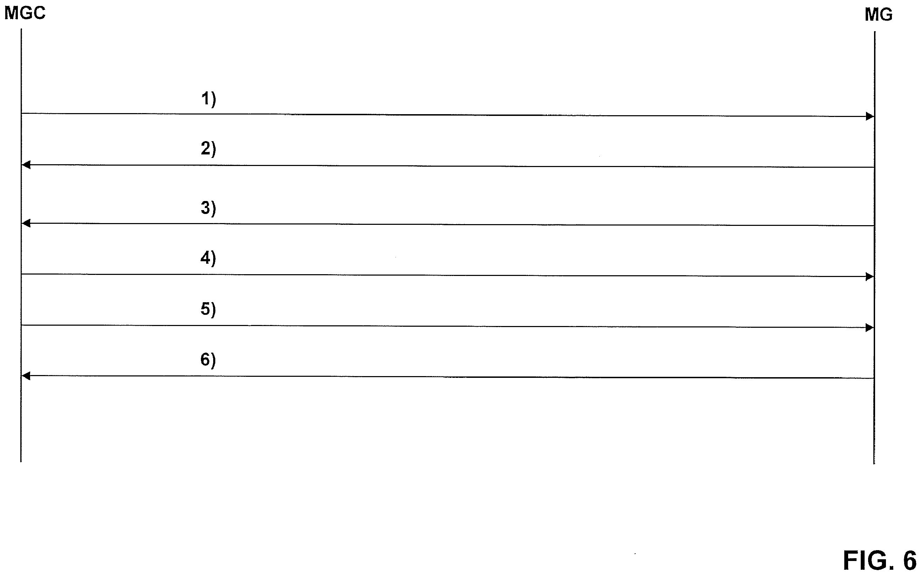

In the embodiment shown in Fig. 6 an example is shown where the media gateway allocates the grouping parameters, whereas in the embodiment shown in Fig. 5 the media gateway controller had allocated the grouping parameter. In step 1 of Fig. 6 the media gateway controller sends a command to the media gateway including inter alia a grouping parameter having a value, such as the value 3, showing that the blade number 3 in the media gateway controller has relation to this termination. The media gateway supporting this grouping parameter acknowledges the command and stores the grouping parameter relation to that termination. In addition, the media gateway adds its own hardware information to the response signal in step 2. This can be an identification number of the board of the media gateway where the termination is located. If a problem with that board is detected by the media gateway and if the board restarts, all terminations of that board need to be taken out of usage. The media gateway sends a command to the media gateway controller with the context ID = ALL and termination ID = ALL including the grouping parameter of the failed board (step 3). In step 4 the media gateway controller responds with either a notify response message or service change response message to the media gateway and the media gateway controller subtracts all terminations related to that grouping parameter. It can be seen in the network error traces that the cause for restart has been at the restarted board in the media gateway. The media gateway controller can initiate a test call to this board in the media gateway making a new add request containing the same information, the message containing the grouping parameter of the failed board. The sending of this message in step 5 can make sure whether the problem was just temporary or whether there is a systematic problem. The media gateway can respond in step 6 with a respond message, so that the media gateway controller can check whether the board in the media gateway is working again. In case the failed board in the media gateway is an exchange terminal board or media stream board, it can mean that about 30,000 calls are to be released due to the board failure. The number of affected calls depends on numerous parameters, inter alia on the speech coder that is used and the capacity of the exchange terminal board itself. Without the invention the media gateway would have to inform the media gateway controller of every single call problem individually, resulting in about 60,000 messages for 30,000 calls when the acknowledgement message by the media gateway controller is taken into account. The sending of these messages may take tens of seconds. When the media gateway controller receives the fault indication for an individual call, it stores the reason for the call release to the call data record (CDR) for charging post-processing purposes. The operator may give a compensation to the subscriber because the call was released by a network fault or the call data record information is just used for other quality evaluations or if there are subscriber queries. However, when a single or two single messages are sent for each termination involved resulting in a 10 seconds waiting time, it is evident that many subscribers after about 10 seconds will release the silent call. This would lead to a large number of calls that are released due to subscriber release where no special information can be stored in the call data record. With the presently claimed invention it is possible to use only one release request message from the media gateway to the media gateway controller with the grouping parameter indicating the faulty board. As a consequence, the media gateway controller has the possibility to store in all call data records of that board the reason of the call release. Additionally, the media gateway controller can release the calls on a call control plane as fast as possible, as only one message needs to be exchanged.

Summarizing, the present invention allows the handling of a specific type of termination in the media gateway controller in a more efficient and more advanced way. Additionally, the termination identifier structure needs not to be adapted in case a grouping parameter is introduced allowing a backwards compatibility with older products. Furthermore, the discussed solution is applicable for ephemeral and TDM terminations.

## Claims

1. A method for handling terminations in a media gateway, MG, (20) or a media gateway controller, MGC, (10), the method **characterized by** the steps of:
- receiving a message relating to one termination (24), containing a grouping parameter,
- storing the grouping parameter in connection with said one termination (24),
- receiving a command addressed to all contexts and all terminations, the command containing a grouping parameter or a Boolean expression of grouping parameters,
- checking each termination, whether the grouping parameter or Boolean expression of grouping parameters contained in the received command corresponds to the grouping parameters stored in connection with each termination, and
- executing the command for each termination where the grouping parameter or Boolean expression of grouping parameters contained in the received command corresponds to the grouping parameters stored in connection with each termination.

2. The method according to claim 1, wherein at least one of the following grouping parameters covering a predetermined range of values is received:
- a MGC grouping parameter for which the media gateway controller is aware of the meaning of the values of the grouping parameter,
- a MGC-MG grouping parameter, for which the media gateway and the media gateway controller are aware of the meaning of the values of the grouping parameter,
- a MG grouping parameter for which the media gateway is aware of the meaning of the values of the grouping parameters.

3. The method according to any of the preceding claims, wherein at least two different grouping parameters are received and stored in connection with said termination, wherein, if the received command contains at least two grouping parameters, the command is only executed for said termination when said at least two different grouping parameters stored in connection with said termination correspond to the at least two grouping parameters contained in the received command.

4. The method according to any of the preceding claims, wherein the grouping parameter is received during a seizure of said termination (24).

5. The method according to any of the preceding claims, wherein rules describing the meaning of different grouping parameters are stored in a centralised database (45) accessible by a plurality of media gateway controllers (10, 41, 42), the media gateway controllers accessing said centralised database for retrieving the rules for the different grouping parameters.

6. The method according to any of claims 2 to 5, wherein the grouping parameter allows to prioritize the terminations used for a call by using a priority dependent grouping parameter.

7. The method according to any of the claims 2-6, wherein the grouping parameters allow to differentiate different kinds of interfaces used in connection with different terminations by using different values of the MGC grouping parameter for each interface.

8. The method according to any of the claims 2-7, wherein the grouping parameter allows to determine for which termination a voice enhancement is necessary by assigning a first value of the MGC-MGw grouping parameter to terminations for which a voice enhancement is necessary and by assigning another value of MGC-MG grouping parameter to terminations for which no voice enhancement is necessary.

9. The method according to any of the preceding claims, wherein the grouping parameter allows to identify a processing unit of the media gateway or the media gateway controller that is controlling said termination in connection with a call by assigning a processing unit depending grouping parameter to said termination.

10. The method according to any of the preceding claims, wherein it is checked whether the media gateway or the media gateway controller supports the grouping parameter dependent execution of commands by a package auditing mechanism of a H.248 protocol.

11. The method according to any of the preceding claims, wherein the range of possible values of the grouping parameter is stored in a H.248 protocol package.

12. The method according to any of the preceding claims, wherein the terminations, for which the grouping parameter contained in the received command corresponds to the grouping parameter stored in connection with said termination, are specified in a reply message to a message containing the command.

13. The method according to any of the preceding claims, further comprising the step of resetting the grouping parameter stored in connection with said termination when it is detected that a processing unit controlling said termination fails.

14. A media gateway (10) or media gateway controller (20) comprising:
- a receiver (14, 21) receiving a grouping parameter included in a message relating to one termination and receiving a command related to all terminations containing a grouping parameter,
- a database (13, 23) storing the received grouping parameter included in a message in connection with said one termination,
- a control unit (12, 22) checking whether the grouping parameter contained in the received command related to all terminations corresponds to the grouping parameters stored in connection with each termination, wherein the control unit executes the command for each termination where the grouping parameter contained in the received command corresponds to the grouping parameters stored in connection with each termination.

15. A method according to claim 1 further comprising the steps of:
- detecting an event influencing a group of terminations having a common grouping parameter, and
- transmitting, by said media gateway or media gateway controller, a command containing said grouping parameter to the other of the media gateway or media gateway controller,

## Patentansprüche

1. Verfahren zur Handhabung von Anschlüssen in einem Media-Gateway, MG, (20) oder einem Media-Gateway-Controller, MGC, (10), wobei das Verfahren durch die folgenden Schritte gekennzeichnet ist:
- Empfangen einer Nachricht in Bezug auf einen Anschluss (24), die einen Gruppierungsparameter enthält,
- Speichern des Gruppierungsparameters in Verbindung mit dem einen Anschluss (24),
- Empfangen eines Befehls, der an alle Kontexte und alle Anschlüsse adressiert ist, wobei der Befehl einen Gruppierungsparameter oder einen booleschen Ausdruck von Gruppierungsparametern enthält,
- Prüfen jedes Anschlusses, ob der Gruppierungsparameter oder der boolesche Ausdruck von Gruppierungsparametern, der im empfangenen Befehl enthalten ist, den Gruppierungsparametern entspricht, die in Verbindung mit jedem Anschluss gespeichert sind, und
- Ausführen des Befehls für jeden Anschluss, wenn der Gruppierungsparameter oder der boolesche Ausdruck von Gruppierungsparametern, der im empfangenen Befehl enthalten ist, den Gruppierungsparametern entspricht, die in Verbindung mit jedem Anschluss gespeichert sind.

2. Verfahren nach Anspruch 1, wobei mindestens einer der folgenden Gruppierungsparameter empfangen wird, der einen vorbestimmten Wertebereich abdeckt:
- ein MGC-Gruppierungsparameter, für welchen der Media-Gateway-Controller die Bedeutung der Werte des Gruppierungsparameters kennt,
- ein MGC-Gruppierungsparameter, für welchen das Media-Gateway und der Media-Gateway-Controller die Bedeutung der Werte des Gruppierungsparameters kennen,
- ein MG-Gruppierungsparameter, für welchen das Media-Gateway die Bedeutung der Werte der Gruppierungsparameter kennt.

3. Verfahren nach einem der vorhergehenden Ansprüche, wobei mindestens zwei verschiedene Gruppierungsparameter empfangen und in Verbindung mit dem Anschluss gespeichert werden, wobei, wenn der empfangene Befehl mindestens zwei Gruppierungsparameter enthält, der Befehl für den Anschluss nur ausgeführt wird, wenn die mindestens zwei verschiedenen Gruppierungsparameter, die in Verbindung mit dem Anschluss gespeichert sind, den mindestens zwei Gruppierungsparametern entsprechen, die im empfangenen Befehl enthalten sind.

4. Verfahren nach einem der vorhergehenden Ansprüche, wobei der Gruppierungsparameter während einer Belegung des Anschlusses empfangen wird (24).

5. Verfahren nach einem der vorhergehenden Ansprüche, wobei Regeln, welche die Bedeutung von verschiedenen Gruppierungspaarmetern beschreiben, in einer zentralen Datenbank (45) gespeichert sind, auf die durch eine Mehrzahl von Media-Gateway-Controllern (10, 41, 42) zugegriffen werden kann, wobei die Media-Gateway-Controller zum Abrufen der Regeln für verschiedene Gruppierungsparameter auf die zentrale Datenbank zugreifen.

6. Verfahren nach einem der Ansprüche 2 bis 5, wobei der Gruppierungsparameter ein Priorisieren der Anschlüsse, die für einen Ruf verwendet werden, durch Verwenden eines prioritätsabhängigen Gruppierungsparameters ermöglicht.

7. Verfahren nach einem der Ansprüche 2 bis 6, wobei die Gruppierungsparameter ein Unterscheiden verschiedener Arten von Schnittstellen, die in Verbindung mit verschiedenen Anschlüssen verwendet werden, durch Verwenden verschiedener Werte des MGC-Gruppierungsparameters für jede Schnittstelle ermöglichen.

8. Verfahren nach einem der Ansprüche 2 bis 7, wobei der Gruppierungsparameter ein Bestimmen, für welchen Anschluss eine Sprachverbesserung notwendig ist, durch Zuordnen eines ersten Wertes des MGC-MG-Gruppierungsparameters zu Anschlüssen, für welche eine Sprachverbesserung notwendig ist, und durch Zuordnen eines anderen Wertes des MGC-MG-Gruppierungsparameters zu Anschlüssen ermöglicht, für welche keine Sprachverbesserung notwendig ist.

9. Verfahren nach einem der vorhergehenden Ansprüche, wobei der Gruppierungsparameter ein Identifizieren einer Verarbeitungseinheit des Media-Gateways oder des Media-Gateway-Controllers, die den Anschluss in Verbindung mit einem Ruf steuert, durch Zuordnen eines verarbeitungseinheitsabhängigen Gruppierungsparameters zum Anschluss ermöglicht.

10. Verfahren nach einem der vorhergehenden Ansprüche, wobei durch einen Paketprüfmechanismus eines H.248-Protokolls geprüft wird, ob das Media-Gateway oder der Media-Gateway-Controller die gruppierungsparameterabhängige Ausführung von Befehlen unterstützt.

11. Verfahren nach einem der vorhergehenden Ansprüche, wobei der Bereich von möglichen Werten des Gruppierungsparameters in einem H.248-Protokoll-Paket gespeichert wird.

12. Verfahren nach einem der vorhergehenden Ansprüche, wobei die Anschlüsse, für welche der im empfangenen Befehl enthaltene Gruppierungsparameter dem Gruppierungsparameter entspricht, der in Verbindung mit dem Anschluss gespeichert ist, in einer Antwortnachricht auf eine Nachricht mit dem Befehl spezifiziert werden.

13. Verfahren nach einem der vorhergehenden Ansprüche, ferner umfassend den Schritt des Rücksetzens des in Verbindung mit dem Anschluss gespeicherten Anschlusses, wenn erkannt wird, dass eine Verarbeitungseinheit ausfällt, die den Anschluss steuert.

14. Media-Gateway (10) oder Media-Gateway-Controller (20), umfassend:
- einen Empfänger (14, 21), der einen Gruppierungsparameter empfängt, der in einer Nachricht enthalten ist, die mit einem Anschluss in Beziehung steht, und einen Befehl in Bezug auf alle Anschlüsse empfängt, der einen Gruppierungsparameter enthält,
- eine Datenbank (13, 23), die den empfangenen Gruppierungsparameter, der in einer Nachricht enthalten ist, in Verbindung mit dem einen Anschluss speichert,
- eine Steuereinheit (12, 22), die prüft, ob der Gruppierungsparameter, der im Befehl in Bezug auf alle Anschlüsse enthalten ist, den Gruppierungsparametern entspricht, die mit jedem Anschluss gespeichert sind, wobei die Steuereinheit den Befehl für jeden Anschluss ausführt, wenn der Gruppierungsparameter, der im empfangenen Befehl enthalten ist, den Gruppenparametern entspricht, die in Verbindung mit jedem Anschluss gespeichert sind.

15. Verfahren nach Anspruch 1, ferner umfassend den folgenden Schritt:
- Erkennen eines Ereignisses, das eine Gruppe von Anschlüssen mit einem gemeinsamen Gruppierungsparameter beeinflusst, und
- Senden eines Befehls, der den Gruppierungsparameter enthält, durch das Media-Gateway oder den Media-Gateway-Controller an das bzw. den anderen vom Media-Gateway oder Media-Gateway-Controller.

## Revendications

1. Procédé de gestion de terminaisons dans une passerelle de support, MG, (20) ou un organe de commande de passerelle de support, MGC, (10), le procédé étant **caractérisé par** les étapes de :
- la réception d'un message relatif à une terminaison (24), contenant un paramètre de regroupement,
- la mémorisation du paramètre de regroupement en relation avec ladite terminaison (24),
- la réception d'une commande adressée à tous les contextes et à toutes les terminaisons, la commande contenant un paramètre de regroupement ou une expression booléenne de paramètres de regroupement,
- le contrôle, à chaque terminaison, si le paramètre de regroupement ou l'expression booléenne de paramètres de regroupement contenu dans la commande reçue correspond aux paramètres de regroupement mémorisés en relation avec chaque terminaison, et
- l'exécution de la commande pour chaque terminaison à laquelle le paramètre de regroupement ou l'expression booléenne de paramètres de regroupement contenu dans la commande reçue correspond aux paramètres de regroupement mémorisés en relation avec chaque terminaison.

2. Procédé selon la revendication 1, dans lequel au moins l'un des paramètres de regroupement suivants couvrant une plage prédéterminée de valeurs est reçu :
- un paramètre de regroupement MGC pour lequel l'organe de commande de passerelle de support est conscient de la signification des valeurs du paramètre de regroupement,
- un paramètre de regroupement MGC-MG, pour lequel la passerelle de support et l'organe de commande de passerelle de support sont conscients de la signification des valeurs du paramètre de regroupement,
- un paramètre de regroupement MG pour lequel la passerelle de support est consciente de la signification des valeurs des paramètres de regroupement.

3. Procédé selon l'une quelconque des revendications précédentes, dans lequel au moins deux paramètres de regroupement différents sont reçus et mémorisés en relation avec ladite terminaison, dans lequel, si la commande reçue contient au moins deux paramètres de regroupement, la commande est exécutée pour ladite terminaison uniquement lorsque lesdits au moins deux paramètres de regroupement différents mémorisés en relation avec ladite terminaison correspondent aux au moins deux paramètres de regroupement contenus dans la commande reçue.

4. Procédé selon l'une quelconque des revendications précédentes, dans lequel le paramètre de regroupement est reçu au cours d'une saisie de ladite terminaison (24) .

5. Procédé selon l'une quelconque des revendications précédentes, dans lequel des règles décrivant la signification de différents paramètres de regroupement sont mémorisées dans une base de données centralisée (45) accessible par une pluralité d'organes de commande de passerelle de support (10, 41, 42), les organes de commande de passerelle de support accédant à ladite base de données centralisée pour récupérer les règles pour les différents paramètres de regroupement.

6. Procédé selon l'une quelconque des revendications 2 à 5, dans lequel le paramètre de regroupement permet de prioriser les terminaisons utilisées pour un appel par l'utilisation d'un paramètre de regroupement dépendant de la priorité.

7. Procédé selon l'une quelconque des revendications 2 à 6, dans lequel les paramètres de regroupement permettent de différencier différents types d'interfaces utilisées en relation avec différentes terminaisons par l'utilisation de différentes valeurs du paramètre de regroupement MGC pour chaque interface.

8. Procédé selon l'une quelconque des revendications 2 à 7, dans lequel le paramètre de regroupement permet de déterminer pour quelle terminaison une amélioration vocale est nécessaire par l'assignation d'une première valeur du paramètre de regroupement MGC-MG à des terminaisons pour lesquelles une amélioration vocale est nécessaire et par l'assignation d'une autre valeur du paramètre de regroupement MGC-MG à des terminaisons pour lesquelles aucune amélioration vocale n'est nécessaire.

9. Procédé selon l'une quelconque des revendications précédentes, dans lequel le paramètre de regroupement permet d'identifier une unité de traitement de la passerelle de support ou de l'organe de commande de passerelle de support qui commande ladite terminaison en relation avec un appel par l'assignation d'un paramètre de regroupement dépendant de l'unité de traitement à ladite terminaison.

10. Procédé selon l'une quelconque des revendications précédentes, dans lequel il est contrôlé si la passerelle de support ou l'organe de commande de passerelle de support prend en charge l'exécution dépendant du paramètre de regroupement de commandes par un mécanisme d'audit de package d'un protocole H.248.

11. Procédé selon l'une quelconque des revendications précédentes, dans lequel la plage de valeurs possibles du paramètre de regroupement est mémorisée dans un package de protocole H.248.

12. Procédé selon l'une quelconque des revendications précédentes, dans lequel les terminaisons, pour lesquelles le paramètre de regroupement contenu dans la commande reçue correspond au paramètre de regroupement mémorisé en relation avec ladite terminaison, sont spécifiées dans un message de réponse à un message contenant la commande.

13. Procédé selon l'une quelconque des revendications précédentes, comprenant en outre l'étape de la réinitialisation du paramètre de regroupement mémorisé en relation avec ladite terminaison lorsqu'il est détecté une défaillance d'une unité de traitement commandant ladite terminaison.

14. Passerelle de support (10) ou organe de commande de passerelle de support (20) comprenant :
- un récepteur (14, 21) recevant un paramètre de regroupement inclus dans un message relatif à une terminaison et recevant une commande relative à toutes les terminaisons contenant un paramètre de regroupement,
- une base de données (13, 23) mémorisant le paramètre de regroupement reçu inclus dans un message en relation avec ladite terminaison,
- une unité de commande (12, 22) contrôlant si le paramètre de regroupement contenu dans la commande reçue relative à toutes les terminaisons correspond aux paramètres de regroupement mémorisés en relation avec chaque terminaison, dans lequel l'unité de commande exécute la commande pour chaque terminaison à laquelle le paramètre de regroupement contenu dans la commande reçue correspond aux paramètres de regroupement mémorisés en relation avec chaque terminaison.

15. Procédé selon la revendication 1, comprenant en outre les étapes de :
- la détection d'un événement influençant un groupe de terminaisons ayant un paramètre de regroupement commun, et
- la transmission, par ladite passerelle de support ou ledit organe de passerelle de support, d'une commande contenant ledit paramètre de regroupement à l'autre de ladite passerelle de support ou dudit organe de passerelle de support.
